# EUROPEAN PATENT APPLICATION

(11) **EP 4 782 146 A1**
(43) Date of publication of application: **29.07.2026**
(21) Application number: 26153587.6
(22) Date of filing: 22.01.2026
(51) Int. Cl.: B24B 19/16, B24B 27/00, B24B 27/06, B24D 5/12, B24B 41/00, B24B 29/08, B24B 51/00

(54) **NEEDLE GRINDER SYSTEM WITH INTEGRATED DUAL CUTTING HEADS**

(30) Priority: 24.01.2025 US 202563749196 P
(71) Applicant: Royal Master Grinders, Inc., Oakland New Jersey 07436 (US)
(72) Inventor: Memmelaar, John, Midland Park, 07432 (US); Morris, Todd, New Windsor, 12553 (US)
(74) Representative: Keller Schneider Patentanwaltsgesellschaft mbH

(57) **Abstract**

Disclosed herein is a grinding system with a dual-head cutting machine configured for simultaneous cutting at two locations along a workpiece. The grinding system may include a grinder configured to perform grinding operations on the workpiece and the cutting machine operatively coupled to the grinder. The cutting machine may include a first cutting assembly with a first cutting wheel operatively coupled to a first actuator, and a second cutting assembly with a second cutting wheel operatively coupled to a second actuator. An indexer may be configured to secure and move the workpiece relative to the first and second cutting wheels. The first cutting wheel may be positioned at a first location along the workpiece, and the second cutting wheel may be positioned at a second location along the workpiece. The cutting machine may be configured to perform cutting operations on one or more workpieces.

## Description

### TECHNICAL FIELD

The present disclosure relates generally to cutting systems, and in particular to a cutting machine with dual cutting heads integrated with a needle grinder.

### BACKGROUND

In the manufacture of needles, cannulas, and similar medical and industrial components, grinding systems are frequently employed to shape raw materials into desired profiles, such as trocar points, beveled edges, or other precision geometries. These grinding systems are necessary for achieving the precision, consistency, and repeatability required in such applications. However, in addition to grinding, another essential step in the manufacturing process is cutting the raw material, typically in the form of elongated workpieces, to specific lengths. This cutting step can occur either prior to or following the grinding operation, depending on the workflow and desired manufacturing sequence.

Traditionally, this cutting operation is performed using separate cutting machines that are not directly integrated with grinding systems. These conventional cutting machines generally operate independently and are equipped with a single cutting head capable of processing one set of workpieces at a time. While functional, this single-head configuration often results in slower processing speeds, creating production bottlenecks and reducing overall manufacturing efficiency. Additionally, separate cutting systems can add logistical complexity, as workpieces must often be manually transferred or rely on cumbersome automation to move between cutting and grinding stages.

Thus, there is a need for an improved cutting module that not only enhances cutting efficiency through advanced configurations but also facilitates seamless integration into existing manufacturing workflows.

### BRIEF SUMMARY

Disclosed herein is a grinding system including a grinder configured to perform grinding operations on a workpiece and a cutting machine operatively coupled to the grinder. The cutting machine may include a first cutting assembly with a first cutting wheel operatively coupled to a first actuator, and a second cutting assembly with a second cutting wheel operatively coupled to a second actuator. An indexer may be configured to secure and move the workpiece relative to the first and second cutting wheels. The first cutting wheel may be positioned at a first location along the workpiece, and the second cutting wheel may be positioned at a second location along the workpiece. The cutting machine may be configured to perform cutting operations on one or more workpieces either prior to or after the grinding operations performed by the grinder. The grinding system may further include features such as simultaneous operation of the first and second cutting wheels, a linear motor for the indexer, a clamp for securing the workpiece, a removal conveyor for transporting the workpiece, and sensors for monitoring the position of the workpiece relative to the cutting wheels. The cutting wheels may be replaceable with tools for producing beveled, angled, or curved cuts, and the grinder may include an end effector for holding and manipulating the workpiece during grinding.

Disclosed herein is also a method of processing a workpiece. The method may include the steps of cutting a workpiece in a first cutting operation at a first location with a first cutting wheel of a cutting machine, and cutting the workpiece in a second cutting operation at a second location with a second cutting wheel of the cutting machine. The method may further include transferring the workpiece from the cutting machine to a grinder and grinding the workpiece using the grinder to produce a desired profile. The cutting machine may be operationally coupled to the grinder. The method may also include performing the first and second cutting operations simultaneously, securing and moving the workpiece incrementally using an indexer, securing the workpiece with an end effector of the grinder before grinding, independently controlling the movement and speed of the cutting wheels, adjusting the position of the cutting wheels to accommodate workpieces of varying lengths, and sorting the workpiece after grinding based on size, shape, or profile using a conveyor operatively coupled to the grinder.

In accordance with an aspect of the present disclosure, a grinding system is disclosed. The grinding system according to this aspect may include a grinder configured to perform grinding operations on a workpiece, a cutting machine operatively couple to the grinder. The cutting machine may include a first cutting assembly including a first cutting wheel, and a second cutting assembly including a second cutting wheel. The first cutting wheel may be operatively coupled to a first actuator configured to drive the first cutting wheel. The second cutting wheel may be operatively coupled to a second actuator configured to drive the second cutting wheel. An indexer may be configured to secure and move the workpiece relative to the first and second cutting heads. The first cutting wheel may be positioned at first location along the workpiece and the second cutting wheel may be positioned at a second location along the workpiece. The cutting machine may be configured to perform cutting operations on the workpiece either prior to or after the grinding operations performed by the grinder. The cutting machine may be operatively coupled to the grinder via a shared control system and/or a physical interface.

Continuing in accordance with this aspect, the first and second cutting wheels may be configured to simultaneously cut the workpiece at the first and second locations.

Continuing in accordance with this aspect, the indexer may include a linear motor configured to move the workpiece incrementally along a cutting path relative to the first and second cutting wheels.

Continuing in accordance with this aspect, the cutting machine may include a clamp configured to secure the workpiece during the cutting operations.

Continuing in accordance with this aspect, the grinder may include an end effector configured to hold and manipulate the workpiece during grinding operations.

Continuing in accordance with this aspect, the cutting machine may include a removal conveyor configured to transport the workpiece after the cutting operations are completed.

Continuing in accordance with this aspect, the cutting wheels may be operatively coupled to motors. The motors may be any of servo motors, stepper motors, and electric motors.

Continuing in accordance with this aspect, the first and second cutting wheels may be replaceable with cutting tools configured to produce beveled, angled, or curved cuts.

Continuing in accordance with this aspect, the cutting machine may include a sensor configured to monitor the position of the workpiece relative to the first and second cutting wheels.

Continuing in accordance with this aspect, the first cutting wheel may be configured to move across a length of the workpiece. The second cutting wheel may be configured to move across the length of the workpiece.

In accordance with an aspect of the present disclosure, a method of processing a workpiece is provided. A method according to this aspect may include cutting a workpiece in a first cutting operation at a first location along the workpiece with a first cutting wheel of a cutting machine, cutting the workpiece in a second cutting operation at a second location along the workpiece with a second cutting wheel of the cutting machine, transferring the workpiece from the cutting machine to a grinder, and grinding the workpiece using the grinder to produce a desired profile. The cutting machine may be operationally coupled to the grinder.

Continuing in accordance with this aspect, the first and second cutting operations may be performed simultaneously.

Continuing in accordance with this aspect, the cutting machine may include an indexer configured to secure and move the workpiece incrementally along a cutting path relative to the first and second cutting wheels.

Continuing in accordance with this aspect, the method may further include a step of securing the workpiece in an end effector of the grinder before performing the grinding operation.

Continuing in accordance with this aspect, the first and second cutting wheels may be operatively coupled to respective actuators configured to independently control a movement and speed of the cutting wheels.

Continuing in accordance with this aspect, the method may include a step of adjusting a position of the first or second cutting wheels to accommodate workpieces of different lengths or profiles.

Continuing in accordance with this aspect, the cutting machine may include sensors configured to monitor the position and alignment of the workpiece during the cutting operations.

Continuing in accordance with this aspect, the method may include sorting the workpiece after grinding based on any of size, shape, and profile using a conveyor operatively coupled to the grinder.

### BRIEF DESCRIPTION OF THE DRAWINGS

A more complete appreciation of the subject matter of the present disclosure and the various advantages thereof can be realized by reference to the following detailed description, in which reference is made to the following accompanying drawings:
FIG. 1 is a perspective view of a cutting machine according to an embodiment of the present disclosure;
FIG. 2 is another perspective view of the cutting machine of FIG. 1;
FIG. 3 is a top view of the cutting machine of FIG. 1;
FIG. 4 is a front view of the cutting machine of FIG. 1;
FIG. 5 is a detailed view of the cutting module of FIG. 1 showing the cutting heads, motors, and a mounting structure;
FIG. 6 is a perspective view of a cutting machine according to an embodiment of the present disclosure;
FIG. 7 is a perspective view of a grinding system incorporating a cutting module and a grinding station according to an embodiment of the present disclosure;
FIG. 8 is a perspective view of the cutting module integrated with the grinding system of FIG. 7;
FIG. 9 is a top view of the cutting module of FIG. 7, and
FIG. 10 is a schematic view of a machining system according to an embodiment of the present disclosure.

### DETAILED DESCRIPTION

Reference will now be made in detail to the various embodiments of the present disclosure illustrated in the accompanying drawings. Wherever possible, the same or like reference numbers will be used throughout the drawings to refer to the same or like features. It should be noted that the drawings are in simplified form and are not drawn to precise scale. Additionally, the term "a," as used in the specification, means "at least one."

As used herein, the term "cutting machine" may refer to a device configured to cut raw materials into specific lengths. As used herein, the terms "cutting machine" and "cutting module" will be used interchangeably and as such, unless otherwise stated, the explicit use of any terms is inclusive of the other term. Similarly, the terms "fixture," "end effector," and "robotic end effector" will be used interchangeably and as such, unless otherwise stated, the explicit use of any of these terms is inclusive of the other term. The term "workpiece" may refer to the raw material that undergoes cutting, grinding, or other manufacturing operations.

Disclosed herein are embodiments of a cutting module and its integration with a grinding system. In particular, the cutting module described herein is configured to enhance production efficiency by incorporating dual cutting heads mounted on a linear motor-driven indexer. This configuration enables simultaneous processing of multiple workpieces, thereby doubling production throughput compared to conventional single-head cutting machines. The cutting module is designed to integrate seamlessly with existing grinding systems or operate independently as part of a broader machining workflow.

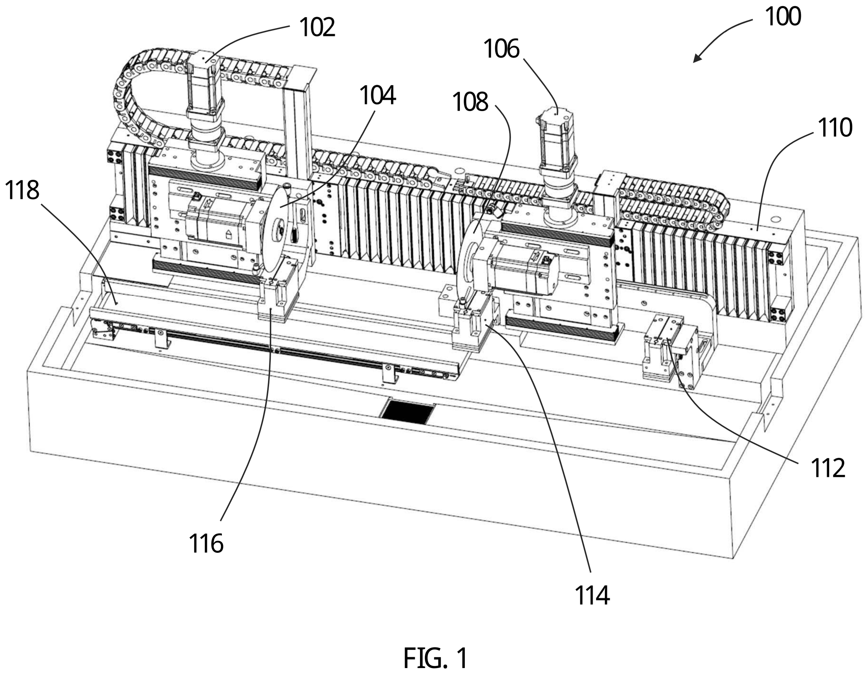

FIGS. 1-5 show various views of a cutting machine 100 according to an embodiment of the present disclosure. Cutting machine 100 is configured to process raw material workpieces by cutting them to desired lengths for subsequent manufacturing operations. Cutting machine 100 includes a dual cutting head assembly comprising a moving cutting wheel assembly 102 and a fixed cutting wheel assembly 106. The moving cutting wheel 104 and fixed cutting wheel 108 are mounted on respective actuators, enabling precise movement, positioning, and engagement with the workpieces during cutting. A dual head actuator 110 drives the moving cutting wheel assembly 102 along a linear motor-driven indexer, allowing for synchronized operation of the cutting wheels. This dual cutting head arrangement enables simultaneous cutting of workpieces or two sections of a single workpiece, effectively doubling the production output compared to single-head cutting machines.

An indexing clamp 112 secures and positions the workpieces along the cutting path, ensuring alignment and stability during the cutting process. A removal conveyor 118 is positioned downstream from the cutting heads and is configured to receive and transport cut pieces efficiently to subsequent operations, such as grinding or post-processing.

In one embodiment, the fixed cutting wheel 108 remains stationary while the moving cutting wheel 104 adjusts dynamically along the linear motor-driven indexer to accommodate workpieces of varying lengths or diameters. In another embodiment, both cutting wheels 104 and 108 may be adjustable, providing additional flexibility for handling a broader range of materials and cutting patterns. The actuators driving the cutting wheels may be servo motors, stepper motors, or other precision drive systems to achieve consistent and accurate cuts.

Additionally, cutting machine 100 may be configured to perform cuts at varying angles or shapes by modifying the orientation or profile of the cutting wheels. For example, beveled, angled, or curved cuts may be achieved by replacing or adjusting the cutting wheels. In some embodiments, cutting machine 100 may also include sensors or feedback mechanisms to monitor the position and quality of the cuts in real-time, enabling automated adjustments for improved precision.

The dual cutting head assembly may also operate in conjunction with additional features, such as a cooling system to manage heat generated during cutting or a debris collection mechanism to maintain a clean operating environment. These enhancements further improve the efficiency and reliability of the cutting process while ensuring consistent quality across production cycles.

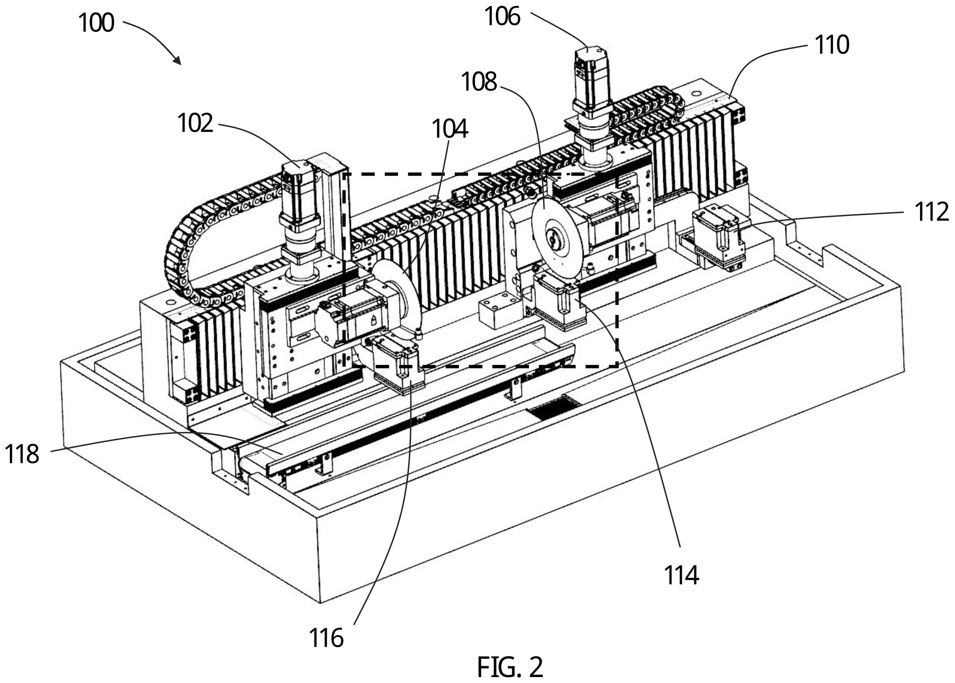

FIG. 2 shows another perspective view of the cutting machine 100, highlighting the interaction between the cutting wheel assemblies and the workpieces. The cutting machine 100 includes clamping heads 114 and 116, which are operatively associated with the fixed cutting wheel 108 and the moving cutting wheel 104, respectively. These clamping heads securely hold the workpieces in position during the cutting operation, ensuring stability and preventing unwanted movement or misalignment. The clamping heads are configured to accommodate workpieces of various diameters and materials, and may include adjustable or replaceable components to adapt to specific manufacturing requirements.

The indexing clamp 112 works in tandem with the clamping heads, advancing the workpieces through the cutting area in precise increments. The movement of the indexing clamp 112 is controlled by a linear motor or similar actuator, which ensures consistent positioning of the workpieces relative to the cutting wheels 104 and 108. This arrangement allows for accurate cuts and minimizes material waste.

The dual cutting head assembly, with its simultaneous operation of the cutting wheels 104 and 108, enables the cutting machine 100 to perform two cuts in parallel. This functionality not only doubles production throughput but also enhances the efficiency of the manufacturing process by reducing the time required for each cycle. In some embodiments, the indexing clamp 112 can be programmed to alternate cutting positions, enabling batch processing of workpieces with varying lengths or profiles.

The removal conveyor 118 is positioned downstream from the cutting wheels and is configured to transport the cut workpieces to subsequent stages of the manufacturing process. The conveyor may include sensors or optical systems to identify and sort cut pieces based on size, shape, or other criteria. In one embodiment, the conveyor is equipped with a debris management system to remove excess material or dust generated during cutting, ensuring a clean and orderly workflow.

Cutting machine 100 may include optional alignment guides or fixtures along the conveyor path to maintain the orientation of the workpieces as they are transferred. In alternative embodiments, the removal conveyor 118 may feature modular sections, allowing integration with other manufacturing equipment such as grinding systems, inspection modules, or packaging units.

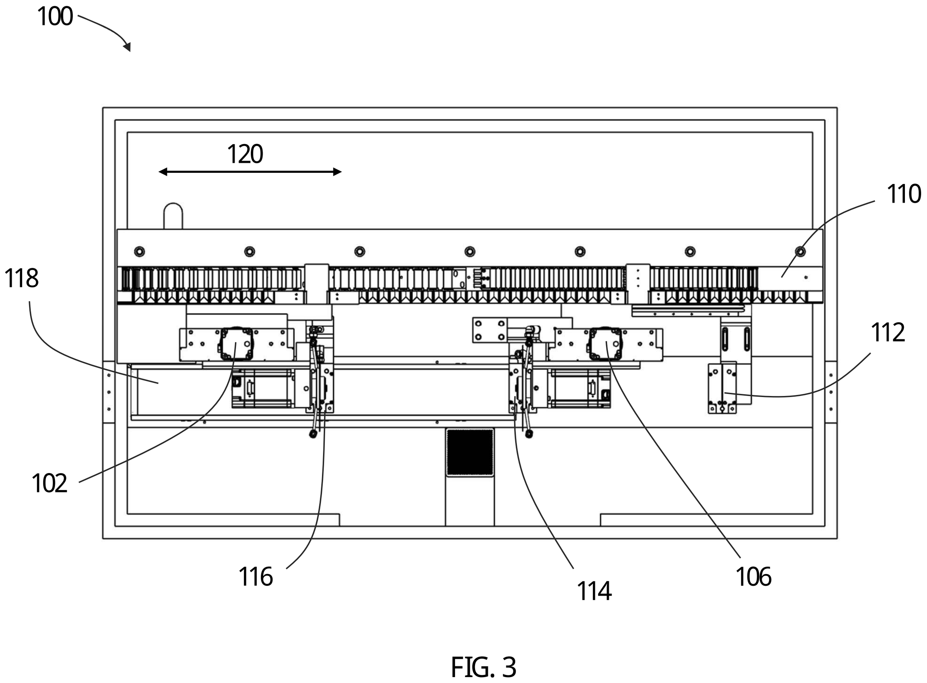

FIG. 3 depicts a top view of the cutting machine 100, showing the layout of the dual cutting head assembly and the indexing mechanism. The linear motor driving the dual head actuator 110 ensures synchronized movement of cutting wheel 104. Movement of the cutting wheel 120, corresponding to the moving cutting wheel 104, is shown in alignment with the workpieces for simultaneous cutting. The clamping heads 114 and 116, associated with the fixed and moving cutting wheel assemblies, respectively, work in conjunction to securely hold the workpieces during cutting.

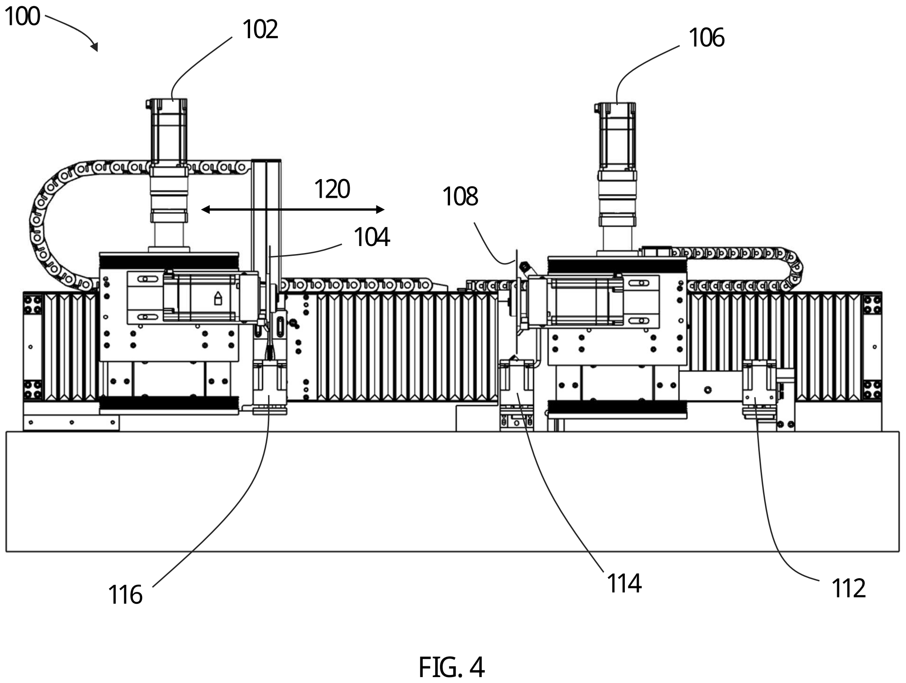

FIG. 4 shows a front view of the cutting machine 100, depicting the arrangement of the cutting wheels and the indexing mechanism. The moving cutting wheel motor 124 and fixed cutting wheel motor 122 drive their respective cutting wheels, enabling efficient processing of the workpieces. The dual cutting head assembly, mounted to the linear motor-driven indexer, allows for precise and synchronized operation, resulting in consistent cut lengths for the workpieces.

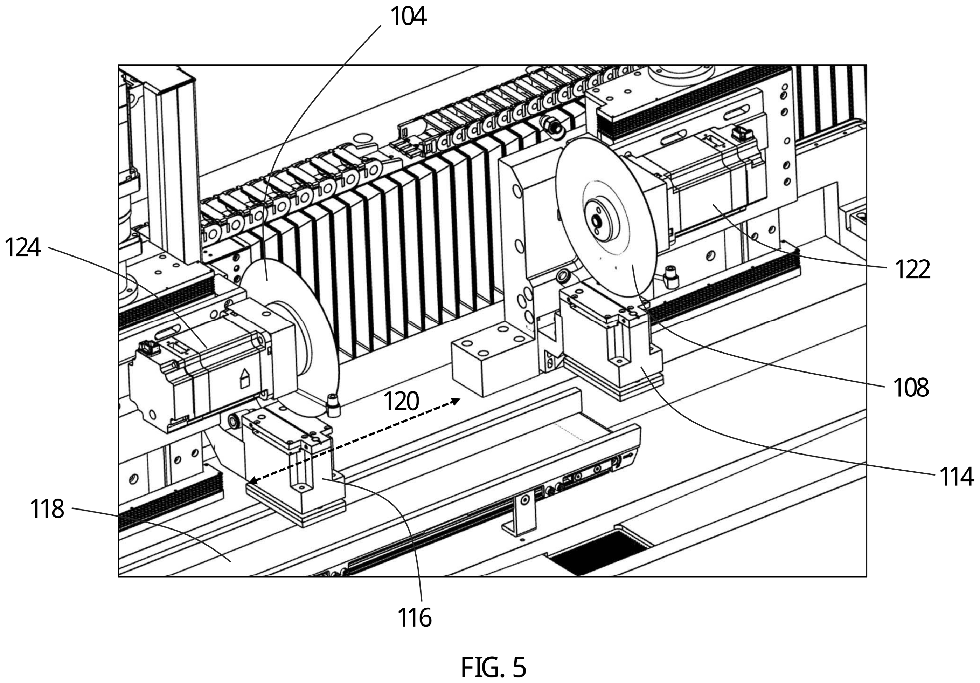

FIG. 5 provides a detailed view of cutting machine 100, showing the structural configuration of the cutting wheels, motors, and mounting structure. The cutting heads, comprising the moving cutting wheel assembly 102 and the fixed cutting wheel assembly 106, are mounted on a linear track system. This track enables controlled movement of the moving cutting wheel assembly 102 along a defined axis, facilitating precise alignment and cutting operations. The linear track is driven by the dual head actuator 110, which synchronizes the movement of the cutting wheels 104 and 108 to ensure accurate and consistent performance.

The clamping fixture 112 secures the workpieces in position during the cutting process. This fixture is designed to apply uniform pressure to hold the workpieces firmly while minimizing deformation or slippage. In some embodiments, the clamping fixture may include adjustable jaws or inserts to accommodate workpieces of different shapes, sizes, and materials. Sensors integrated into the clamping fixture may provide feedback on clamping force, ensuring optimal stability during operation.

The removal conveyor 118 is positioned downstream from the cutting heads to collect and transport cut materials to subsequent processing stages. The conveyor can be equipped with features such as anti-slip surfaces and adjustable speeds, allowing it to handle a wide range of cut materials efficiently. In some embodiments, the removal conveyor may include a sorting mechanism to separate workpieces based on size or orientation, enhancing the automation capabilities of the system.

Motors 122 and 124, operatively coupled to the cutting wheels 108 and 104, respectively, drive the rotation of the wheels with high precision. These motors may be servo motors, stepper motors, or other types of precision actuators capable of maintaining consistent cutting speed and torque. The interaction between the motors and the cutting wheels ensures precise and efficient cutting, even for workpieces made of varying material types and hardness. In one embodiment, the cutting wheels may be replaceable with blades or discs optimized for specific materials, such as metals, plastics, or composites.

In an alternative embodiment, the cutting module may include an integrated lubrication or cooling system to reduce heat generation during the cutting process, thereby extending the lifespan of the cutting wheels and maintaining the quality of the cuts. Additionally, a debris collection system may be incorporated to remove excess material or particles generated during cutting, ensuring a clean operating environment.

The cutting machine's modular design enables it to be easily integrated with existing manufacturing systems, including grinding and inspection modules, or to operate as a standalone unit. The flexibility and precision offered by cutting machine 100 make it suitable for a wide range of applications in medical, industrial, and other manufacturing settings. The grinder and the cutting machine can be synchronized using a centralized control system that coordinates the timing of cutting and grinding operations to minimize production delays. Cutting machine 100 can be retrofitted into existing grinding workflows by replacing manual loading mechanisms with automated loaders or robotic manipulators.

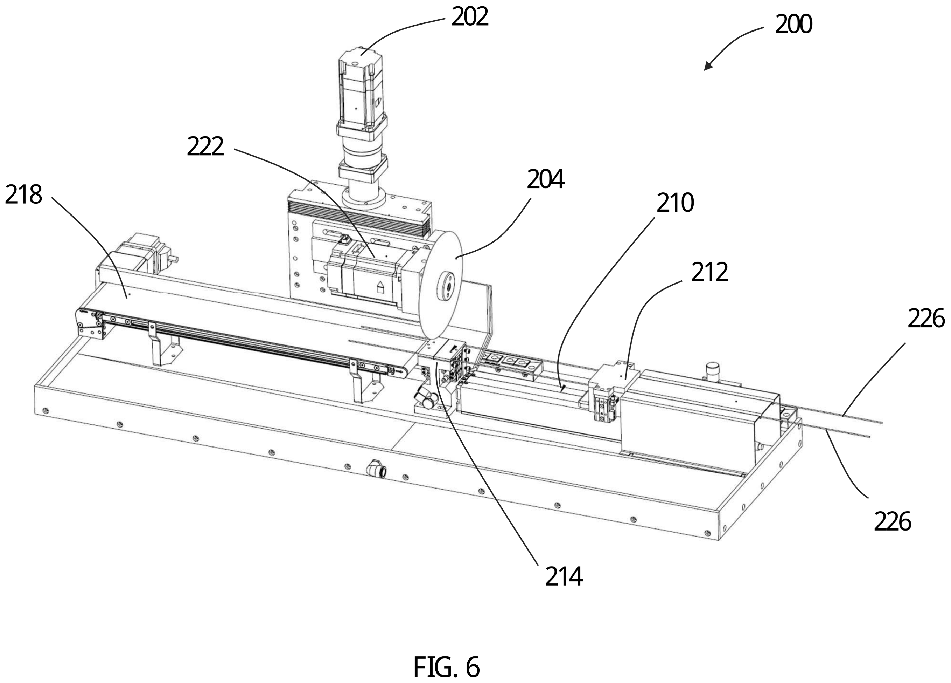

Referring now to FIG. 6, there is shown a cutting machine 200 according to another embodiment of the present disclosure. Cutting machine 200 is similar in many respects to cutting machine 100, and therefore like elements are referred to with the same numerals within the 200-series. Cutting machine 200 is configured to process workpieces 226 by cutting them to desired lengths using a single cutting wheel assembly.

Cutting machine 200 includes a cutting wheel assembly 202, which comprises a cutting wheel 204 driven by a motor 222. The motor 222 is mounted to the cutting machine's structural frame and is configured to provide the rotational force necessary for precise and consistent cutting. Unlike cutting machine 100, which incorporates a dual cutting wheel arrangement for simultaneous processing of two cuts, cutting machine 200 employs a single cutting wheel configuration. This configuration is particularly suited for applications where single cuts are sufficient, or where the manufacturing requirements prioritize simplicity and cost-effectiveness over high throughput.

An indexing actuator 210 is operatively connected to an indexing clamp 212, which secures and positions the workpieces 226 during the cutting process. The indexing clamp 212 advances the workpieces in precise increments, ensuring proper alignment relative to the cutting wheel 204. The clamping fixture 214 further stabilizes the workpieces, minimizing vibration or movement that could affect the quality of the cuts.

Positioned downstream from the cutting area is a removal conveyor 218, which transports the cut workpieces to subsequent manufacturing stages or collection points. The removal conveyor is configured to accommodate varying lengths and sizes of cut pieces, and may include features such as adjustable height, speed control, or sorting mechanisms to enhance operational efficiency.

Cutting machine 200 is particularly versatile, as it is capable of handling a wide range of workpiece materials and sizes. The single cutting wheel design reduces mechanical complexity and maintenance requirements, making it suitable for operations where production volume is lower or precision in single cuts is prioritized. In some embodiments, cutting machine 200 may be equipped with additional features, such as a cooling system to manage heat generated during cutting or a debris management system to collect material particles and maintain cleanliness.

The modular design of cutting machine 200 enables it to be integrated with other systems, such as grinding modules or robotic manipulators, as part of a larger manufacturing workflow. For instance, cutting machine 200 can be used in pre-grinding operations to prepare workpieces for subsequent shaping or in post-grinding operations to refine the final dimensions of the workpieces. The simplified configuration of cutting machine 200 provides a cost-effective solution while maintaining the precision and reliability required for various manufacturing applications.

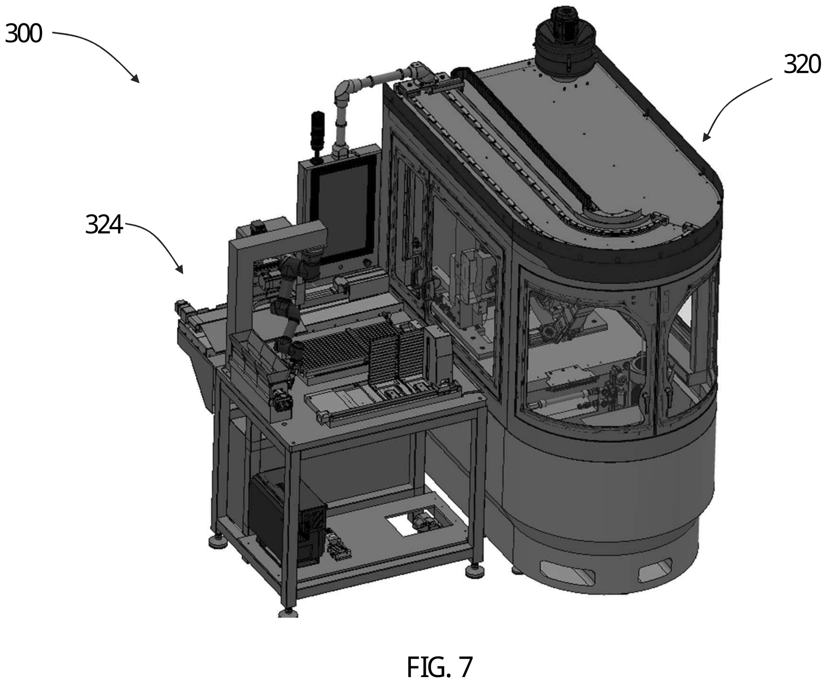

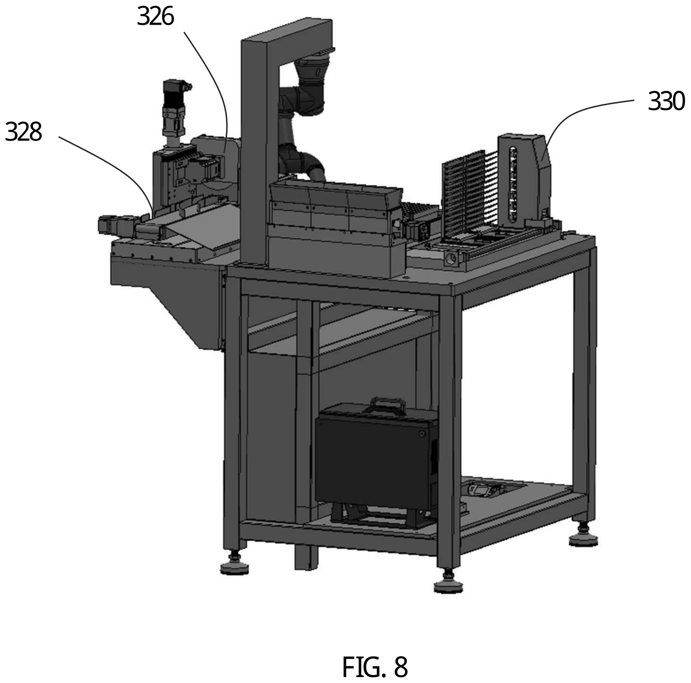

FIGS. 7-9 shown a grinding system 300 that incorporates a grinder 320 integrated with a cutting machine 324. The cutting machine 324, positioned adjacent to the grinder 320, facilitates seamless workflow integration between cutting and grinding operations. The cutting machine 324 may be similar in configuration and functionality to either cutting machine 100 or cutting machine 200 as disclosed in earlier embodiments, offering flexibility in configurations based on specific manufacturing needs.

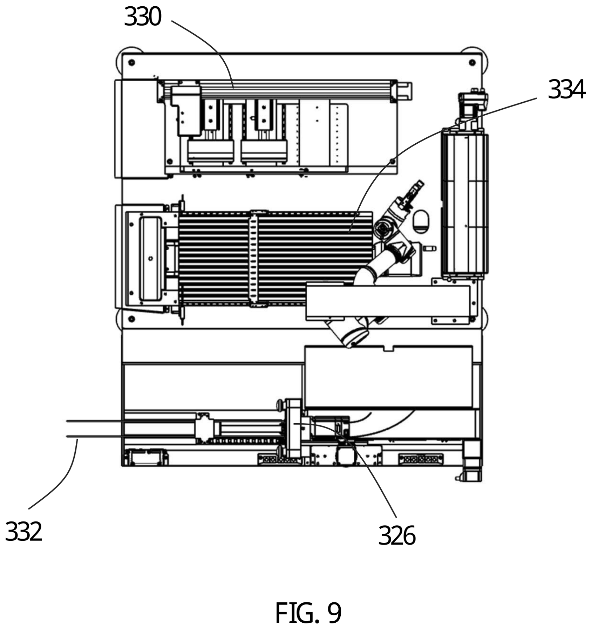

Cutting machine 324 is equipped with a cutting wheel 326, which performs precise cutting operations on workpieces 332 as best shown in FIG 9. Cut workpieces are initially placed in a loader 334, either manually by an operator or automatically by a robotic system. The loader 334 ensures proper orientation and positioning of the workpieces for loading to an end effector (not shown). Once the workpieces are securely positioned, the cutting wheel 326 is actuated to cut the workpieces to the desired lengths. The precise operation of the cutting machine 324 ensures that the workpieces are consistently prepared for subsequent grinding operations.

Following the cutting process, the prepared workpieces are transferred to the end effector of the grinder 320. The end effector is configured to securely hold and manipulate the workpieces during the grinding process. The grinder 320 performs various machining operations on the workpieces, such as shaping, beveling, or creating trocar points, depending on the specific application. The integration of the cutting module 324 and the grinder 320 allows the workpieces to move seamlessly from the cutting stage to the grinding stage without the need for manual intervention or complex transfer mechanisms.

Once the grinding operations are complete, the end effector returns the finished workpieces to a designated finished workpiece section 330. This section is positioned adjacent to the grinder 320, facilitating efficient collection and storage of the processed workpieces. The finished workpiece section 330 may be equipped with sorting or stacking mechanisms to organize the workpieces based on size, shape, or other characteristics, enabling streamlined handling for downstream processes.

Grinding system 300 provides an integrated solution for cutting and grinding operations, enhancing workflow efficiency. By positioning the cutting machine 324 adjacent to the grinder 320, the system minimizes downtime and manual handling, allowing for faster production cycles. In one embodiment, the cutting module 324 and grinder 320 are synchronized via a central control system, enabling automated coordination of cutting and grinding operations. Sensors and feedback mechanisms integrated into the system monitor the progress of each workpiece, ensuring consistent quality and reducing the likelihood of errors.

In alternative embodiments, the cutting module 324 may include additional features, such as a dual cutting head assembly, as described for cutting machine 100, to further increase production throughput. Similarly, the grinder 320 may be equipped with advanced tooling or fixtures to accommodate a broader range of workpiece profiles. The modular nature of the grinding system 300 allows for customization and scalability, making it suitable for a variety of industrial and medical manufacturing applications.

Although a grinding machine is described in the embodiment above, it should be understood that the cutting machine of the present disclosure can be used with any other machining process. The modular and versatile configuration of the cutting machine, whether configured as cutting machine 100 or cutting machine 200, allows it to seamlessly integrate with various manufacturing systems beyond grinding. For instance, the cutting machine can be utilized in combination with welding systems, drilling systems, or milling systems where precise, pre-machining preparation of raw materials is essential. The ability to cut workpieces to precise lengths and shapes prior to these operations can enhance the efficiency and quality of subsequent machining processes.

In one embodiment, the cutting machine can be integrated with a welding system to prepare workpieces for joining operations. The precise cuts provided by the cutting module ensure that the workpieces align perfectly at the weld joints, reducing the need for additional adjustments or corrections during welding. In another embodiment, the cutting machine can be used in conjunction with a drilling system, where accurately sized and positioned workpieces improve the consistency and accuracy of drilled holes.

The cutting machine can also be employed in standalone applications where cutting is the primary operation. For example, the system may be used in the production of raw material blanks for medical devices, automotive components, or aerospace applications. The cutting machine's ability to handle various materials, including metals, plastics, and composites, makes it suitable for a wide range of industries. Furthermore, the cutting module may include additional features such as sensors, automated adjustments, or multi-head configurations to enhance its functionality for these standalone uses.

The modular nature of the cutting machine allows for easy customization and scalability. For example, the system can be expanded to include multiple cutting modules operating in parallel, significantly increasing production capacity. Alternatively, the cutting module can be equipped with specialized cutting wheels or tooling to produce unique profiles, such as angled, beveled, or curved cuts, to meet specific application requirements. By decoupling the cutting machine from a specific downstream process, it can be deployed flexibly across different manufacturing lines as needed.

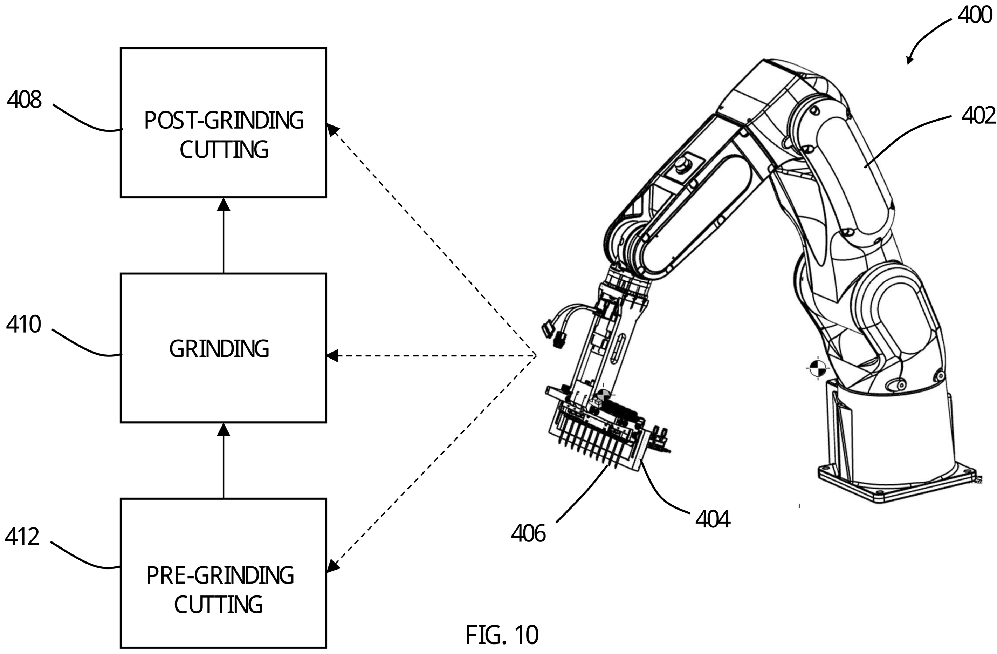

FIG. 10 shows a schematic view of a machining system 400 incorporating a grinding system with an integrated cutting machine according to an embodiment of the present disclosure. Machining system 400 represents a versatile and automated manufacturing system configured to perform cutting and grinding operations on workpieces. The machining system 400 includes pre-grinding cutting operations 412, grinding operations 410, and post-grinding cutting operations 408. These processes are facilitated by a cutting machine, a grinder, and a robotic manipulator, all working in conjunction to provide seamless workflow integration.

In this embodiment, workpieces 406 are loaded into the system via a loader such as loader 334 or other input mechanisms. During the pre-grinding phase 412, the workpieces are processed by the cutting machine, which is configured to cut the workpieces to desired lengths. The cutting machine may operate in a manner similar to cutting machines 100 or 200, as described above, and may include features such as dual cutting heads for increased throughput or a single cutting wheel for simpler operations. The cutting machine ensures that the workpieces are precisely sized for subsequent grinding operations.

After pre-grinding cutting, the workpieces are transferred to the grinding phase 410. This phase is performed by a grinder operatively coupled to an end effector 404 of a robotic manipulator 402. The robotic manipulator positions and rotates the workpieces against a grinding surface to achieve the desired profiles, such as trocar points, beveled edges, or other precision shapes. The robotic manipulator 402 is equipped with multiple degrees of freedom, allowing precise movement and positioning of the workpieces during grinding. Coolant systems, sensors, and feedback mechanisms may be integrated into the grinding system to maintain quality and reduce heat generation.

Following the grinding phase, the machining system 400 may direct the workpieces to the post-grinding cutting phase 408. During this phase, the cutting machine can perform additional cutting operations, such as trimming, shaping, or further resizing the workpieces to final specifications if necessary. This flexibility allows the system to handle a wide variety of workpiece profiles and manufacturing requirements. In some embodiments, the cutting machine may be repositioned or adjusted to perform either pre- or post-grinding cutting, depending on the workflow needs.

Finished workpieces are then directed to a collection or packaging station for downstream processing. The machining system 400 may include sorting mechanisms, conveyors, or other auxiliary systems to streamline the handling of finished workpieces. The integration of cutting and grinding operations within a single system minimizes manual intervention and ensures production efficiency. In the pre-grinding phase, the cutting machine sizes raw workpieces for grinding, while in the post-grinding phase, it performs trimming to achieve final specifications.

Machining system 400 offers a modular and scalable solution for a wide range of industrial and medical applications. By incorporating the cutting machine, which can operate in both pre- and post-grinding workflows, the system provides versatility and adaptability. This integration enables manufacturers to optimize their production processes, reduce cycle times, and maintain consistent quality across diverse manufacturing scenarios.

Furthermore, although the invention disclosed herein has been described with reference to particular features, it is to be understood that these features are merely illustrative of the principles and applications of the present invention. It is therefore to be understood that numerous modifications, including changes in the sizes of the various features described herein, may be made to the illustrative embodiments and that other arrangements may be devised without departing from the spirit and scope of the present invention. In this regard, the present invention encompasses numerous additional features in addition to those specific features set forth in the paragraphs below. Moreover, the foregoing disclosure should be taken by way of illustration rather than by way of limitation as the present invention is defined in the examples of the numbered paragraphs, which describe features in accordance with various embodiments of the invention, set forth in the claims below.

## Claims

1. A grinding system comprising:
a grinder configured to perform grinding operations on a workpiece, and
a cutting machine operatively couple to the grinder, the cutting machine comprising:
a first cutting assembly including a first cutting wheel, the first cutting wheel operatively coupled to a first actuator configured to drive the first cutting wheel;
a second cutting assembly including a second cutting wheel, the second cutting wheel operatively coupled to a second actuator configured to drive the second cutting wheel, and
an indexer configured to secure and move the workpiece relative to the first and second cutting heads;
wherein the first cutting wheel is positioned at first location along the workpiece and the second cutting wheel is positioned at a second location along the workpiece, the cutting machine configured to perform cutting operations on the workpiece either prior to or after the grinding operations performed by the grinder.

2. The grinding system of claim 1, wherein the first and second cutting wheels are configured to simultaneously cut the workpiece at the first and second locations.

3. The grinding system of claim 1, wherein the indexer includes a linear motor configured to move the workpiece incrementally along a cutting path relative to the first and second cutting wheels.

4. The grinding system of claim 1, wherein the cutting machine includes a clamp configured to secure the workpiece during the cutting operations.

5. The grinding system of claim 1, wherein the grinder includes an end effector configured to hold and manipulate the workpiece during grinding operations.

6. The grinding system of claim 1, wherein the cutting machine includes a removal conveyor configured to transport the workpiece after the cutting operations are completed.

7. The grinding system of claim 1, wherein the cutting wheels are operatively coupled to motors.

8. The grinding system of claim 7, wherein the motors are any of servo motors, stepper motors, and electric motors.

9. The grinding system of claim 1, wherein the first and second cutting wheels are replaceable with cutting tools configured to produce beveled, angled, or curved cuts.

10. The grinding system of claim 1, wherein the cutting machine includes a sensor configured to monitor the position of the workpiece relative to the first and second cutting wheels.

11. The grinding system of claim 1, wherein the first cutting wheel is configured to move across a length of the workpiece.

12. The grinding system of claim 11, wherein the second cutting wheel is configured to move across the length of the workpiece.
